# EUROPEAN PATENT APPLICATION

(11) **EP 4 071 590 A1**
(43) Date of publication of application: **12.10.2022**
(21) Application number: 19958507.6
(22) Date of filing: 30.12.2019
(51) Int. Cl.: G06F 3/048

(54) **DEVICE MANAGEMENT METHOD AND APPARATUS**

(71) Applicant: GUANGDONG OPPO MOBILE TELECOMMUNICATIONS CORP., LTD., Dongguan, Guangdong 523860 (CN)
(72) Inventor: ZHANG, Jun, Dongguan, Guangdong 523860 (CN); RU, Zhao, Dongguan, Guangdong 523860 (CN)
(74) Representative: Taor, Simon Edward William
(86) International application number: PCT/CN2019/130165
(87) International publication number: WO 2021/134335

(57) **Abstract**

Provided are a device management method and apparatus, a chip, a computer-readable storage medium, a computer program product and a computer program. The method includes: based on preset information included in a scene collection resource, performing N adjustment operations on a property value of each of one or more properties of a target device, and adjusting the one or more properties of the target device from a current value to a target value (21), N being an integer greater than or equal to 2; and the property value of each of the one or more properties of the target device gradually increases and/or gradually decreases in the N adjustment operations. The preset information is configured for indicating a condition that needs to be satisfied for performing each of the N adjustment operations on one or more properties of the target device, and/or is configured for indicating a time interval of each of the N adjustment operations, and/or is configured for determining a sub target value corresponding to each of the one or more properties corresponding to each of the N adjustment operations.

## Description

### TECHNICAL FIELD

The disclosure relates to the technical field of device control, and in particular to a device management method and apparatus, a chip, a computer-readable storage medium, a computer program product and a computer program.

### BACKGROUND

With the improvement of technological level, intelligent devices are used in more and more scenes, making a whole system become more intelligent. For example, in a smart home system including devices, networks, platforms and applications, specific device automation and device linkage are built to achieve specific applications and services. The devices can be automatically controlled by operating a created scene collection resource mainly through an OCF protocol. However, in the above processing, if the intelligence of a target device to be controlled is not high, it may be impossible to control property gradients of the target device, or it may be impossible to control the properties of the target device more intelligently to comply with the state of the target device.

### SUMMARY

In order to solve the above technical problem, embodiments of the disclosure provide a device management method and apparatus, a chip, a computer-readable storage medium, a computer program product and a computer program.

A first aspect provides a device management method, which may include the following operations.

Based on preset information included in a scene collection resource, N adjustment operations are performed on a property value of each of one or more properties of a target device, and the property value of the one or more properties of the target device is adjusted from a current value to a target value, N being an integer greater than or equal to 2. The property value of each of the one or more properties of the target device gradually increases and/or gradually decreases in the N adjustment operations.

The preset information is configured for indicating a condition that needs to be satisfied for performing each of the N adjustment operations on one or more properties of the target device, and/or is configured for indicating a time interval of each of the N adjustment operations, and/or is configured for determining a sub target value corresponding to each of the one or more properties corresponding to each of the N adjustment operations.

A second aspect provides a device management apparatus, which may include a processing unit.

The processing unit is configured to, based on the preset information included in the scene collection resource, perform N adjustment operations on the property value of the one or more properties of the target device, and adjust the property value of each of the one or more properties of the target device from the current value to the target value, N being an integer greater than or equal to 2. The property value of each of the one or more properties of the target device gradually increases and/or gradually decreases in the N adjustment operations.

The preset information is configured for indicating the condition that needs to be satisfied for performing each of the N adjustment operations on one or more properties of the target device, and/or is configured for indicating the time interval of each of the N adjustment operations, and/or is configured for determining the sub target value corresponding to each of the one or more properties corresponding to each of the N adjustment operations.

A third aspect provides a device management apparatus, which may include a processor and a memory. The memory is configured to store a computer program. The processor is configured to call and run a computer program stored in the memory to implement the method in the first aspect or each implementation mode thereof.

A fourth aspect provides a chip, which is configured to implement the method in any of the first aspect to the third aspect and the seventh aspect to the tenth aspect or each implementation mode thereof.

Specifically, the chip may include a processor, which configured to call and run a computer program in a memory to enable a device installed with the chip to implement the method in any of the first aspect to the third aspect and the seventh aspect to the tenth aspect or each implementation mode thereof.

A fifth aspect provides a computer-readable storage medium is provided, which may be configured to store a computer program. The computer program enables a computer to execute the method in any of the first aspect to the third aspect and the seventh aspect to the tenth aspect or each implementation mode thereof.

A sixth aspect provides a computer program product, which may include a computer program instruction. The computer program instruction enables a computer to execute the method in any of the first aspect to the third aspect and the seventh aspect to the tenth aspect or each implementation mode thereof.

A seventh aspect provides a computer program, which when running in a computer, enables a computer to execute the method in any of the first aspect to the third aspect and the seventh aspect to the tenth aspect or each implementation mode thereof.

By means of the above solutions, it is possible to control gradual adjustment of a property value of a target device from a current value to a target value by adding preset information to a scene collection resource. In this way, the device that does not support property gradient can achieve property gradient by judging preconditions and adjusting the property value many times, in addition, and the property value can be adjusted from the current value to the target value, thereby avoiding the problem in related art that the property value can only be adjusted from one fixed value to another, resulting in degraded use experience.

### BRIEF DESCRIPTION OF THE DRAWINGS

FIG. 1 to FIG. 4 are schematic diagrams of several processing logics for a scene collection resource and a rule resource.
FIG. 5 is a flowchart of a device management method provided by an embodiment of the disclosure.
FIG. 6-1 to FIG. 11 are schematic diagrams of processing logics for multiple scene collection resources provided by embodiments of the disclosure.
FIG. 12 is a first structure diagram of a device management apparatus provided by an embodiment of the disclosure.
FIG. 13 is a second structure diagram of a device management apparatus provided by an embodiment of the disclosure.
FIG. 14 is a schematic block diagram of a chip provided by an embodiment of the disclosure.

### DETAILED DESCRIPTION

In order to understand characteristics and technical contents in the embodiments of the present disclosure in more detail, the implementation of the embodiments of the disclosure is elaborated in combination with the accompanying drawings. The accompanying drawings are only used for reference, but not intended to limit the embodiments of the disclosure.

The technical solutions in the embodiments will be described below in combination with the drawings in the embodiments. It is apparent that the described embodiments are not all embodiments but part of embodiments of the disclosure. All other embodiments obtained by those of ordinary skill in the art based on the embodiments in the disclosure without creative work shall fall within the scope of protection of the application.

In order to understand characteristics and technical contents in the embodiments of the present disclosure in more detail, the implementation of the embodiments of the disclosure is elaborated in combination with the accompanying drawings. The accompanying drawings are only used for reference, but not intended to limit the embodiments of the disclosure.

In an OCF protocol of related art, automatic control of a device is achieved by operating a scene collection resource that has been created (by users or predefined by a system), and device linkage is achieved by defining a rule resource.

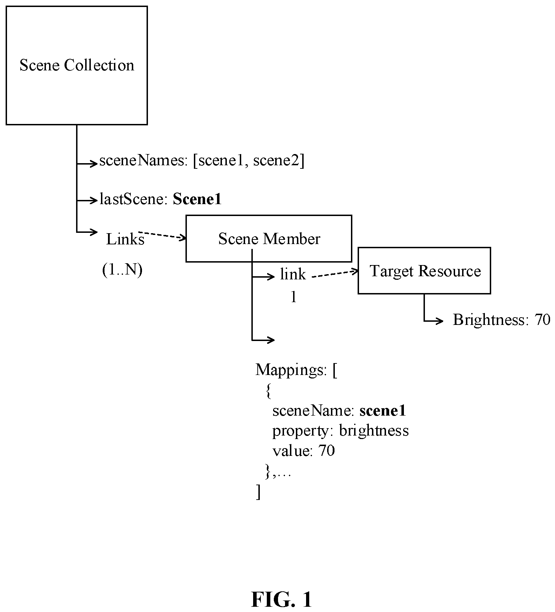

In the OCF protocol, as illustrated in FIG. 1, a scene collection resource has the following meaning:

when a value of a last scene (lastScene) is set to any of values of scene names (sceneNames), for example, scene 1 illustrated in the figure, a target resource referenced by a link (a reference relationship) of a scene member will be operated to change a property value of the target resource to a property value of an element whose value of the sceneName is the same as the value of the lastScene in a preset mapping element.

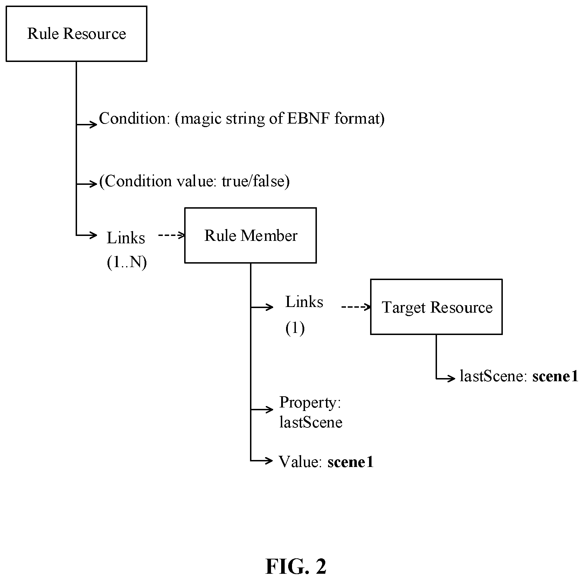

In the OCF protocol, as illustrated in FIG. 2, a rule resource is defined as follows:

a condition consists of a relational expression and a logical expression, and when a property value of a resource involved in a condition makes a judgment result of the condition true, a lastScene of a target resource referenced by links of a rule member is set to a preset lastScene property value of the rule member, which will cause the aforementioned scene collection resource to be operated.

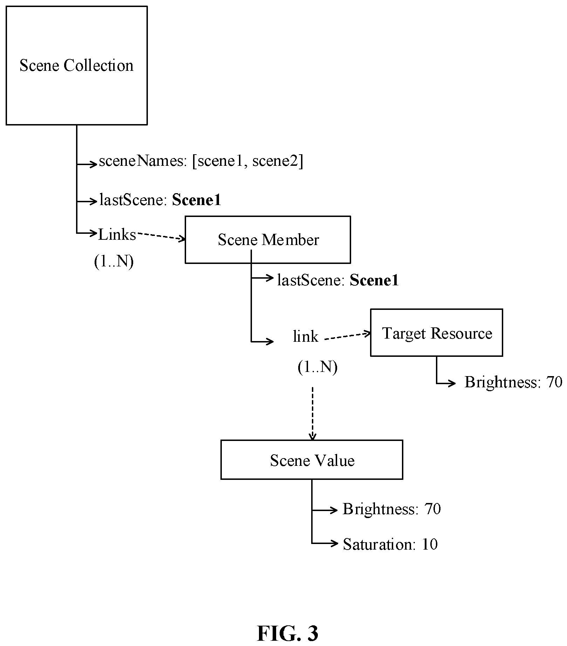

As illustrated in FIG. 3, another scene collection resource is defined as follows:
when a value of a lastScene is set to any of values of sceneNames, a scene member resource whose value of a sceneName is the same as the value of the lastScene referenced by the links is operated to change a property value of a target resource referenced by the links of the scene member resource to a preset scene value.

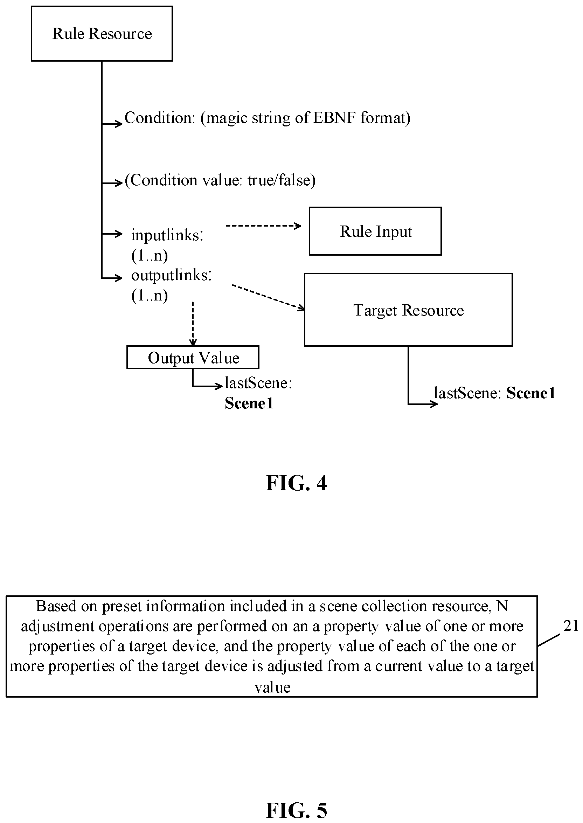

As illustrated in FIG. 4, another rule resource is defined as follows:
a condition consists of a relational expression and a logical expression, and when a property value of a resource referenced by input links makes a judgment result of the condition true, a lastScene of a target resource referenced by output links is set to a preset output value, which will cause the aforementioned scene collection resource to be operated.

As defined in related art, when intelligence of a device itself is not high, setting of a condition in rules may be complicated and even unable to meet a service requirement. Examples are given below.

When a door is opened (door sensor report 1, that is, door_sensor:state=1), a desk lamp is turned on (desk_lamp:state=1), and gradually adjusted to maximum brightness (desk_lamp:brightness=100). When a door is closed (door sensor report 0, that is, door_sensor:state=0), a desk lamp is gradually adjusted to minimum brightness (desk_lamp:brightness=0), and finally turned off (desk_lamp:state=0).

Among the above requirements, first, if the target device itself cannot support intelligent brightness gradient, timed adjustment is required to be performed when changing of a property value is implemented, but there is no timed processing in a scene of related art; second, since a current property value of the target device is not fixed, it is impossible to ensure that the property value of the target device can be adjusted from the current value to a required value, and usually, the property value can only be adjusted from 0 to a target value, or from the target value to 0. Therefore, without making adjustment in combination with a current state of the target device, upgraded use experience cannot be provided to users.

Based on this, an embodiment of the disclosure provides a device management method to solve the above problem. As illustrated in FIG. 5, the method may include the following operations.

At S21, based on preset information included in a scene collection resource, N adjustment operations are performed on a property value of each of one or more properties of a target device, and the property value of each of the one or more properties of the target device is adjusted from a current value to a target value, N being an integer greater than or equal to 2. The property value of each of the one or more properties of the target device gradually increases and/or gradually decreases in the N adjustment operations.

The preset information is configured for indicating a condition that needs to be satisfied for performing each of the N adjustment operations on one or more properties of the target device, and/or is configured for indicating a time interval of each of the N adjustment operations, and/or is configured for determining a sub target value corresponding to each of the one or more properties corresponding to each of the N adjustment operations.

Specifically, the solution provided in the example may be applied to devices with information processing and control capabilities, for example, a management device in a smart home system.

One or more properties of the target device may be set according to an actual situation. For example, a first property and a second property of the target device are assumed to be brightness and a R value in RGB respectively. Correspondingly, the property value of the first property and second property may be changed in each adjustment operation. The changes of the property values corresponding to different properties may be the same or different. For example, the brightness may increase gradually, and the R value as the second property may increase and then decrease gradually. For another example, three properties are RGB values. The R value increases, then decreases, then increases; the G value decreases and then increases; and the B value increases progressively. There is no exhaustion here.

The target device may be any device that the management device can control. For example, in a smart home system, the target device may be a desk lamp, then a property of the corresponding target device may be the brightness of the desk lamp, and a value of the property of the target device may be a brightness value of the desk lamp. For another example, the target device may be a humidifier, and a property value corresponding to a property of the target device may be the amount of mist corresponding to humidity. For another example, the target device may be a heating device, such as a heating radiator or an air conditioner, and a property of the target device may be temperature, and the corresponding property value may be a temperature value. In addition, there may also be more types of target devices. Any devices that can adjust (for example, increase or decrease gradually) their own property value may fall within the scope of protection of the embodiment. There is no exhaustion in the embodiment.

The detailed processing of the aforementioned solution is described through multiple embodiments.

### Embodiment 1

The preset information may include:
N first preconditions, and/or N first timers.

Each of the N first preconditions corresponds to an adjustment operation, and each of the first preconditions includes the condition that needs to be satisfied for performing the adjustment operation.

Each of the N first timers corresponds to an adjustment operation, and each of the first timers is configured for controlling the time interval of the corresponding adjustment operation.

And/or, the preset information may also include:
the sub target value of each of the one or more properties respectively corresponding to the N adjustment operations.

The N may be preset based on an actual situation. For example, in a scene where a target object is a desk lamp, the N may be set to a large value, for example, 20, to control the light to slowly grow brighter, then the corresponding sub target value may be controlled for 20 times to adjust the light property.

In addition, the first timers corresponding to different first preconditions may be the same or different. For example, the timing lengths of all the N first timers may be set to the same; or the timing lengths of a part of the first timers may be set to the same timing length A, and the timing length of the other part may be set to the same timing length B; or, the timing length of each first timer is different from that of each other.

Different first preconditions correspond to different preset sub target values. Moreover, when N adjustment operations are performed in sequence, a sub target value corresponding to the n-th adjustment operation is greater than the sub target value corresponding to the (n-1)-th adjustment operation; or, when N adjustment operations are performed in sequence, the sub target value corresponding to the n-th adjustment operation is less than the sub target value corresponding to the (n-1)-th adjustment operation.

Moreover, the minimum value in multiple sub target values may be 0, and the maximum value in multiple sub target values may be preset according to an actual situation. For example, taking that the target device is a desk lamp as an example, whether the maximum value is the maximum brightness supported by the desk lamp (for example, the lamp in the living room at night) may be determined according to a current scene; or, during the night, the maximum value corresponding to the bedside desk lamp may be the brightness. For another example, when the target device is an air conditioner, the maximum value may also be determined according to a current scene and time (or season). For example, when it is a winter night, the maximum temperature of the air conditioner may be controlled to 28 degrees centigrade; and when the time corresponding to the current scene is a winter day, the maximum temperature may be set to 26 degrees centigrade to reduce a temperature difference between indoor and outdoor. There is no exhaustion here.

The operation that based on the preset information included in the scene collection resource, N adjustment operations are performed on the property value of the one or more properties of the target device, and the property value of each of the one or more properties of the target device is adjusted from the current value to the target value may include the following operations.

During an n-th adjustment operation on the property value of the target device, it is judged whether a state of the target device satisfies an n-th first precondition included in the preset information of the scene collection resource, and a first judgment result is obtained, n being an integer greater than or equal to 1 and less than or equal to N.

When the first judgment result indicates that the state of the target device satisfies the n-th first precondition, the property value of each of the one or more properties of the target device is adjusted to a corresponding sub target value within the time interval corresponding to an n-th first timer corresponding to the n-th first precondition.

States of different target devices may be set respectively, for example, taking into account whether the target device is turned on, and a current property value of the target device.

It should be pointed out that before the n-th adjustment operation is performed, on and off states of the target device may also be judged. For example, it is judged through the 0th precondition whether the target device is in the off state, and if so, the sub target value of the target device is set to "on".

It should be pointed out that the first precondition, the first timer, and the sub target value included in the preset information may exist at the same time, or only one or two of them may exist.

For example, N first preconditions and the sub target value of each of the one or more properties respectively corresponding to the N first preconditions are set in the scene collection resource, then during each adjustment, it is determined, based on whether the first precondition is satisfied, whether to adjust one or more properties of the target device respectively to the sub target value corresponding to this adjustment.

Or, only the sub target value may be set in the scene collection resource, and during each adjustment, no judgment is made for a state, as long as one or more properties of the target device are adjusted to the corresponding sub target value.

Or, the first timer and the sub target value may be included in the scene collection resource, and during each adjustment, one or more properties of the target device may be adjusted to the corresponding sub target value within the corresponding time interval.

The preset information may be set in a mapping element included in the scene collection resource. Or, the preset information may be set in a scene value element included in the scene collection resource.

In combination with the accompanying drawings and examples, the processing mode in which the preset information is set in the mapping element and the processing mode in which the preset information is set in the scene value element are described in detail below.

### Example 1

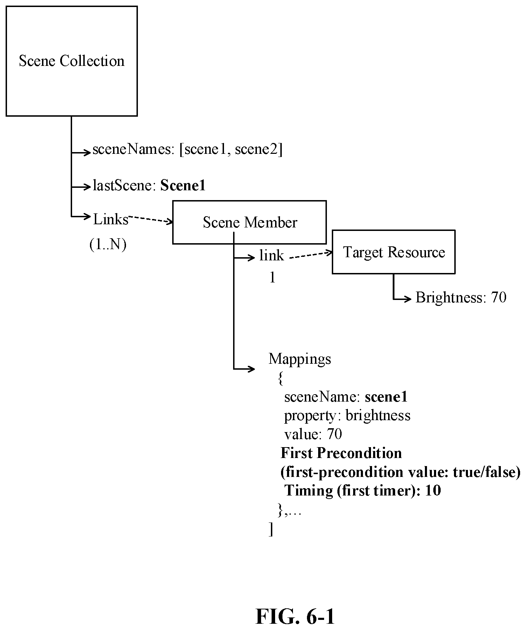

As illustrated in FIG. 6-1, one or more sceneNames, a lastScene, N links, a scene member, a mapping element, and a target resource may be included in a scene collection resource.

The mapping element in the scene collection resource may also include the name of the lastScene, a property name, a sub target value, a first precondition, a precondition value corresponding to the first precondition, and a first timer.

Since each link corresponds to a mapping element, each mapping element includes one of N first preconditions, which is called an n-th first precondition. The n-th first precondition may consist of a relational expression and a logical expression, which may be expressed as "Magic string of EBNF format". The specific content may be set according to an actual situation, and there is no exhaustion here.

When the lastScene in the scene collection resource is any one of the sceneNames, multiple links corresponding to the lastScene are determined.

Based on the sequence of the multiple links, a scene member corresponding to each link may be determined in sequence, and N adjustment operations may be performed on a target resource corresponding to the link, namely a property value of the target device.

Multiple links may be N links, which are executed in order from 1 to N.

One of the N adjustment operations that are performed on the target resource corresponding to the link, namely the property value of the target device, which is called the n-th adjustment operation, is described in detail, specifically including the following operations.

Based on the scene member n corresponding to the n-th link, the target object is referenced; the current state of the target device is judged according to the n-th first precondition included in the mapping element of the scene member n, and a judgment result is obtained.

When the judgment result indicates that the target device satisfies the n-th first precondition, the value of the n-th first precondition is true, then the property value of each of the one or more properties of the target device is adjusted to a corresponding sub target value within the time interval corresponding to the n-th first timer included in the mapping element.

When the judgment result ensures that the n-th first precondition is not satisfied, it is judged whether the current state of the target device satisfies the (n+1)-th first precondition.

And so on, until the n-th first precondition is executed, the processing ends.

Based on the solution provided in the example, taking that the target device is a desk lamp and a corresponding property is brightness as an example, a detailed description is given below.

It may be set in a rule resource that a condition is "door_sensor:state==1", a reference scene is with name "test", and the lastScene is "open"; and a condition is "door_sensor:state==0", a reference scene is with name "test", and the lastScene is "close". The composition of the rule resource may be seen in FIG. 2. The condition in the rule resource is set as "door_sensor" being in state 1, then the triggered scene is test, and the corresponding sceneName is "open". If the condition in the rule resource is set as "door_sensor" being in state 0, then the triggered scene is "close". State 1 and state 0 may respectively indicate that the door is opened or closed.

Further, when the lastScene in the scene collection resource is determined as "open" (when the sceneName is "test", the lastScene is set as "open"), the subsequent processing performed based on the corresponding N links is illustrated in combination with FIG. 6-1.

When link 1 of scene member 1 is "desk lamp", in the mapping element of scene member 1, the precondition is "state==0", a property timing value is set to 0ms, and a property state value is set to 1. That is, the link of scene member 1 is desk lamp, and the first one of the N first preconditions included in the mapping element indicates that the current state of the desk lamp is off. When the result is true, the state of the desk lamp is set to on based on the time interval 0 of the first timer.

When link 2 of scene member 2 is "desk lamp", in the mapping element of scene member 2, the precondition is "state==1 && current_brightness< brightness", the property timing value is set to 10ms, and the property "brightness" is 5. That is, the link2 of scene member 2 is desk lamp, and the second one of the N first preconditions included in the mapping element indicates that the current state of the desk lamp is on, and the current brightness value is less than the sub target value (namely a sub brightness value). When the result is true, the brightness of the desk lamp is set to the sub target value 5 based on the time interval 10ms of the second of the first timers; and so on.

When link 21 of scene member 21 is "desk lamp", in the mapping element of scene member 21, the precondition is "state==1 && current_brightness< brightness", the property timing value is set to 200ms, and the property "brightness" is 100. That is, processing is performed based on aforementioned multiple scene members until the lastScene member 21, link 21 of scene member 21 is "desk_lamp", the 21st first precondition included in the mapping element indicates that the current state of the desk lamp is on, and the current brightness value is less than the sub target value (namely the sub brightness value); and when the result is true, the brightness of the desk lamp is set to the sub target value 100 based on the time interval 200ms of the second of the first timers.

It should be pointed out here that since N first preconditions are added, the adjustment may be performed starting from a current value of one or more properties of the target device. The specific analysis is as follows. Since the links are called in order of 1 to N, if one of the corresponding first preconditions is not satisfied, then a corresponding value is false, and the subsequent processing of assigning a value to one or more properties to the target device is not performed. Therefore, only when the current state of the target device is matched, the requirements of the first precondition are satisfied and the adjustment operations are performed on the property value of the one or more properties. Therefore, the above solution can adjust a current value of the target device to a target value.

When the lastScene is "close", the effect of gradually turning off the desk lamp may be achieved, as follows.

When link 1 of scene member 1 is "desk_lamp", in scene map, the precondition is "state==1 && current_brightness > brightness", the property timing value is set to 10ms, and the property "brightness" is 95.

When link 2 of scene member 2 is "desk_lamp", in scene map, the precondition is "state==1 && current_brightness > brightness", the property timing value is set to 20ms, and the property "brightness" is 90.

When the link of scene member 21 is "desk_lamp", in scene map, the precondition is "state==1", the property timing value is set to 210ms, and the property state value is set to 0.

The detailed description of the above processing is similar to the processing of increasing brightness, except that the property value is gradually decreased, so it will not be repeated.

### Example 2

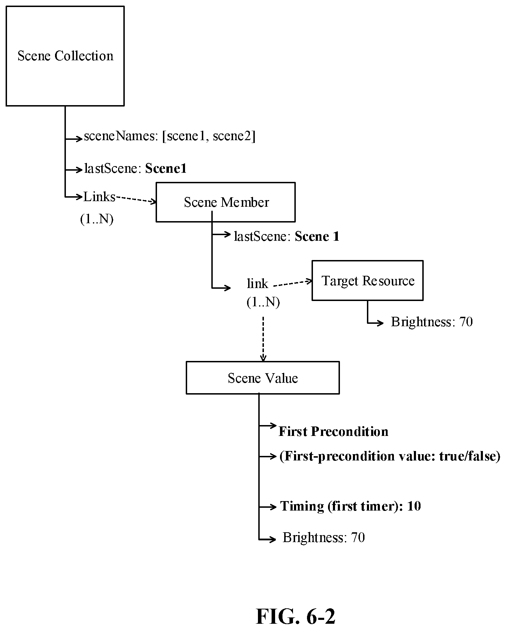

As illustrated in FIG. 6-2, it can be seen that one or more sceneNames, a lastScene, N links, a scene member, a scene value element, and a target resource may be included in a scene collection resource.

The scene value element in the scene collection resource may also include a sub target value, a first precondition, a precondition value corresponding to the first precondition, and a first timer.

Since each link corresponds to a scene value element, each scene value element includes one of N first preconditions, which is called an n-th first precondition. The n-th first precondition consists of a relational expression and a logical expression, which may be expressed as "Magic string of EBNF format". The specific content is set according to the actual situation, and there is no exhaustion here.

When the lastScene in the scene collection resource is any one of the sceneNames, multiple links corresponding to the lastScene may be determined.

Based on the sequence of the multiple links, a scene member corresponding to each link may be determined in sequence, and N adjustment operations may be performed on the target resource corresponding to the link, namely the property value of the target device.

Multiple links may be N links, which are executed in order from 1 to N.

One of the N adjustment operations that are performed on the target resource corresponding to the link, namely the property value of the target device, which is called the n-th adjustment operation, is described in detail, specifically including the following operations.

N links of the lastScene point to the scene member, and the link refers to the target object. A current state of the target device may be judged according to the n-th first precondition included in the scene value element of the scene member, and a judgment result may be obtained.

When the judgment result indicates that the target device satisfies the n-th first precondition, the value of the n-th first precondition is true, and then within the time interval corresponding to the n-th first timer included in the scene value element, one or more properties of the target device are adjusted to the corresponding sub target value.

When the judgment result is that the n-th first precondition is not satisfied, it is judged whether the current state of the target device satisfies the (n+1)-th first precondition.

And so on, until the n-th first precondition is executed, the processing ends.

According to the solution provided by the example, taking a desk lamp as an example, a detailed description is given below.

It may be set in the rule resource that the condition is "door_sensor:state==1", a reference scene (with name "test"), and the lastScene is "open"; and the condition is "door_sensor:state==0", a reference scene (with name "test"), and the lastScene is "close". The composition of the rule resource may be seen in FIG. 2. The condition in the rule resource is set as "door_sensor" is in state 1, the triggered scene is test, and the corresponding sceneName is "open". If the condition in the rule resource is set as "door_sensor" is in state 0, the triggered scene is "close". State 1 and state 0 may respectively indicate that the door is opened or closed.

Further, when the lastScene in the scene collection resource is determined as "open" (when the sceneName is "test", the lastScene is set as "open"), the subsequent processing performed based on the corresponding N links is illustrated in combination with FIG. 6-1.

When link 1 of scene member 1 is "desk lamp", in the scene value element of scene member 1, the precondition is "state==0", a property timing value is set to 0ms, and a property state value is set to 1; that is, the link of scene member 1 is desk lamp, and the first of the first preconditions included in the scene value element indicates that the current state of the desk lamp is off; when the result is true, the state of the desk lamp is set to on based on the time interval 0 of the first timer.

When link 2 of scene member 2 is "desk_lamp", in the scene value element of scene member 2, the precondition is "state==1 && current_brightness< brightness", the property timing value is set to 10ms, and the property "brightness" is 5; that is, the link2 of scene member 2 is desk lamp, and the second of the first preconditions included in the scene value element indicates that the current state of the desk lamp is on, and the current brightness value is less than the sub target value (namely a sub brightness value); when the result is true, the brightness of the desk lamp is set to the sub target value 5 based on the time interval 10ms of the second of the first timers; and so on.

When link 21 of scene member 21 is "desk_lamp", in the scene value element of scene member 21, the precondition is "state==1 && current_brightness< brightness", the property timing value is set to 200ms, and the property "brightness" is 100. That is, processing is performed based on aforementioned multiple scene members until the lastScene member 21, link 21 of scene member 21 is "desk_lamp", the 21st first precondition included in the scene value element indicates that the current state of the desk lamp is on, and the current brightness value is less than the sub target value (namely the sub brightness value); if the result is true, the brightness of the desk lamp is set to the sub target value 100 based on the time interval 200ms of the second of the first timers.

When the lastScene is "close", the processing of gradually turning off the desk lamp is performed, as follows.

When the links of scene member 1 is "desk_lamp", in scene value, the precondition is "state==1 && current_brightness > brightness", the property timing value is set to 10ms, and the property "brightness" is 95.

When the links of scene member 2 is "desk_lamp", in scene value, the precondition is "state==1 && current_brightness > brightness", the property timing value is set to 20ms, and the property "brightness" is 90.

And so on.

When the link of scene member 21 is "desk_lamp", in scene value, the precondition is "state==1", the property timing value is set to 210ms, and the property state value is set to 0.

The detailed description of the above processing is similar to the processing of increasing the brightness, except that the property value is gradually decreased, so it will not be repeated.

The above two examples are described for the processing of one property. The present embodiment also includes cases for multiple properties. In the case directed to multiple properties, the difference from the above two examples is that the setting of the sub target value is added.

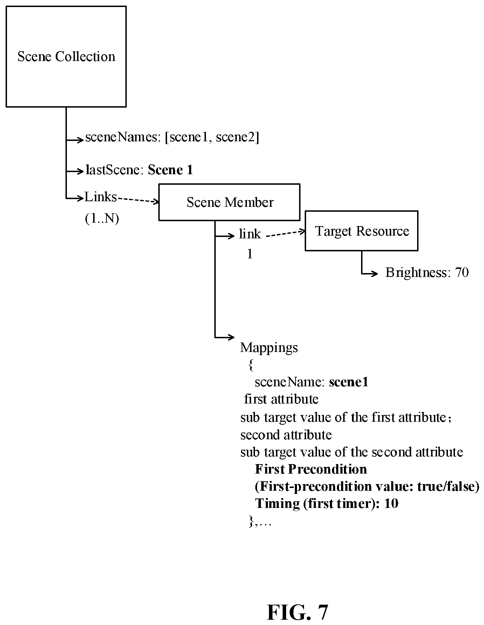

The difference from example 1 is that multiple property names and the sub target value corresponding to each property name are added to the mapping element. For example, with reference to FIG. 7, it is assumed that for two properties which are respectively called a first property and a second property, the first property and its corresponding sub target value, and the second property and its corresponding sub target value may be set in the mapping element corresponding to each of the first preconditions.

The difference from example 2 is only that multiple property names and the sub target value corresponding to each property are added to the scene value element. Elaborations are omitted herein.

It should be pointed out that different properties may have the same or different change trends. For example, in three properties, property 1 increases progressively in N adjustment operations; property 2 decreases progressively in N adjustment operations; and property 3 increases first, and then decreases (and may increase again) in N adjustment operations. There is no exhaustion here.

### Embodiment 2

The preset information may include:
M second preconditions, and/or M second timers, and/or execution expressions respectively corresponding to the M second preconditions, M being an integer greater than or equal to 1 and less than or equal to N.

The second precondition is a condition that needs to be satisfied for performing at least one adjustment operation.

The second timer is configured for controlling the time interval of the adjustment operation.

The execution expression is an expression configured for calculating the sub target value corresponding to each of the one or more properties.

Here, it should be understood that one second precondition may correspond to one or more execution expressions. In other words, the number of execution expressions may be the same as the number of properties. For example, when three properties need to be adjusted, each second precondition may include three execution expressions that are respectively configured for calculating the sub target value corresponding to the three properties.

And/or, the preset information may also include:
the number of repeats corresponding to each of the M second preconditions.

The number of repeats is the number of adjustment operations performed on the property value of the one or more properties of the target device based on a corresponding second precondition.

The difference from example 1 is that in the present embodiment, an execution expression is added, which is configured for calculating the sub target value when the adjustment operation corresponding to the same second precondition is performed each time, and obtaining the sub target value corresponding to this adjustment. The number of repeats of each second precondition may be determined by its corresponding number of repeats.

In addition, the second timers corresponding to different second preconditions may be the same or different.

The different second preconditions have different sub target values calculated based on the corresponding execution expression. In addition, the execution expressions included in different second preconditions may be the same or different.

It should be pointed out that in the present embodiment, N adjustment operations can be completed by means of M second preconditions and the number of repeats corresponding to them. For example, if M is equal 3, and N is equal to 10, the first one of the M second preconditions may correspond to three adjustment operations, or the number of repeats may be considered as 2; the second one of the M second preconditions may correspond to four adjustment operations, and the corresponding number of repeats may be 3; the third one of the M second preconditions may correspond to three adjustment operations, and the number of repeats may be 2. This is just an example. In fact, the value of N and the value of M may be set more or less. There is no exhaustion here.

The operation that based on the preset information included in the scene collection resource, N adjustment operations are performed on the property value of the one or more properties of the target device, and the property value of each of the one or more properties of the target device is adjusted from the current value to the target value may include the following operations.

During an n-th adjustment operation on the property value of the target device, it is judged whether the state of the target device satisfies an m-th second precondition included in the preset information of the scene collection resource, it is judged whether the number of adjustment operations performed based on the m-th second precondition reaches a corresponding number of repeats, and a second judgment result is obtained, n being an integer greater than or equal to 1 and less than or equal to N, and m being an integer greater than or equal to 1.

When the second judgment result indicates that the state of the target device satisfies the m-th second precondition and the number of adjustment operations performed based on the m-th second precondition does not reach the corresponding number of repeats, the sub target value corresponding to each of the one or more properties is calculated based on one or more execution expressions corresponding to the m-th second precondition, and within the time interval corresponding to an m-th second timer corresponding to the m-th second precondition, the property value of each of the one or more properties of the target device is adjusted to a corresponding sub target value.

It should be pointed out that before the n-th adjustment operation is performed, on and off states of the target device may also be judged. For example, it is judged through the 0th precondition whether the target device is in the off state, and if so, the sub target value of the target device is set to "on".

It should be understood that the second precondition, the second timer, the execution expression, and the number of repeats included in the preset information may exist at the same time, or only one or more of them may exist.

For example, the second preconditions and the execution expression of each of the one or more properties respectively corresponding to the second preconditions are set in the scene collection resource, then during each adjustment, it is determined, based on whether the second precondition is satisfied, whether to adjust one or more properties of the target device respectively to the sub target value calculated by the execution expression corresponding to this adjustment. There is no limit on the number of repeats, that is, the adjustment may be performed only once without repeat.

Of course, there are other combinations, which are not exhaustive in the present embodiment.

The preset information may be set in a mapping element included in the scene collection resource. Or, the preset information may be set in a scene value element included in the scene collection resource.

In combination with the accompanying drawings and examples, the processing mode in which the preset information is set in the mapping element and the processing mode in which the preset information is set in the scene value element are described in detail below.

### Example 3

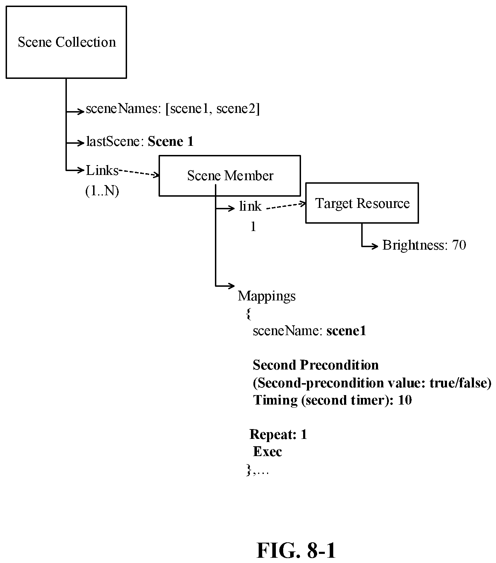

As illustrated in FIG. 8-1, it can be seen that one or more sceneNames, a lastScene, M links, a scene member, a mapping element, and a target resource may be included in a scene collection resource.

The mapping element in the scene collection resource may also include the name of the lastScene, a property name, a sub target value, a second precondition (also represented as Precondition), a precondition value corresponding to the second precondition, the second timer, and the number of repeats.

Since each link corresponds to a mapping element, each mapping element includes one second precondition, which is called an m-th second precondition. The m-th second precondition may consist of a relational expression and a logical expression, which may be expressed as "Magic string of EBNF format". The specific content may be set according to an actual situation, and there is no exhaustion here. In addition, each mapping element also corresponds to a repeat and an execution expression, which is represented by "exec". The specific expression content is also indicated as "Magic string of EBNF format" in the figure.

When the lastScene in the scene collection resource is any one of the sceneNames, multiple links corresponding to the lastScene are determined.

Based on the sequence of the multiple links, a scene member corresponding to each link may be determined in sequence, and N adjustment operations may be performed on a target resource corresponding to the link, namely a property value of the target device.

Multiple links are executed in sequence.

One of the N adjustment operations that are performed on the target resource corresponding to the link, namely the property value of the target device, which is called the n-th adjustment operation, is described in detail, specifically including the following operations.

Based on the scene member n corresponding to the n-th link, the target object is referenced; the current state of the target device is judged according to the m-th second precondition included in the mapping element of the scene member n, and a judgment result is obtained.

When the judgment result indicates that the target device satisfies the m-th second precondition, the value of the m-th second precondition is true, and it is determined whether the number of repeats of performing the adjustment operation based on the m-th second precondition reaches a preset number of repeats; if not, the sub target value corresponding to one or more properties of this adjustment are calculated based on the execution expression, and then within the time interval corresponding to the m-th second timer included in the mapping element, the property value of each of the one or more properties is adjusted to the corresponding sub target value.

The processing based on the rule resource is the same as the aforementioned embodiments, and will not be repeated here. The present embodiment focuses only on the difference from the aforementioned embodiments. Based on the solution provided in the example, taking that the target device is a desk lamp and a property to be adjusted is brightness as an example, a detailed description is given below.

When the lastScene is "open", the link of scene member 1 are "desk_lamp", in the mapping element of scene member 1, the precondition is "state==0", the property timing value is set to 0ms, a property repeat value is set to 1, and a property exec value is set to "state=1". That is, the link of scene member 1 is desk lamp, the first of the second preconditions included in the mapping element indicates that the current state of the desk lamp is off; if the result is true, based on the time interval 0 of the first timer, the number of repeats 1 means no repeat, and the state of the desk lamp is set to on. The setting of repeat may be the same as above. When repeat is set to 1, it means the adjustment is performed only once without repeat; or, repeat may be set to 0, which means that the adjustment is performed only once without repeat. Repeat is flexibly set in actual processing, and there is no limit here.

The link of scene member 2 is "desk_lamp", in the mapping element, the precondition is "state==1 && current_brightness <= 95", the property timing value is set to 10ms, the property repeat value is set to 20, and the property exec value is set to "brightness= current_brightness+5". That is, the second of the second preconditions is repeated 20 times, the execution expression indicates that the sub target value is equal to the current brightness value plus 5, and the time interval of each adjustment operation is 10ms, until the current brightness is not less than 95.

Or, when the lastScene is set to "close" in closing processing, the link of scene member 1 is "desk lamp", in the mapping element, the precondition is "state==1 && current_brightness >= 5", the property timing value is set to 10ms, the property repeat value is set to 20, and the property exec value is set to "brightness= current_brightness-5".

The link of scene member 2 is "desk lamp", in the mapping element, the precondition is "state==1 && current_brightness <= 0", the property timing value is set to 10ms, the property repeat value is set to 21, and the property exec value is set to "state=0".

The specific meaning is similar to that of turning on a desk lamp, except that the brightness value of the desk lamp is decreased each time until the brightness value is equal to 0.

### Example 4

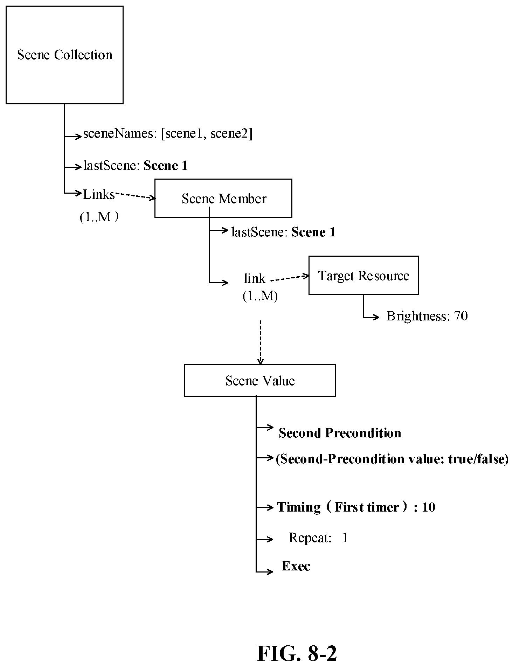

As illustrated in FIG. 8-2, it can be seen that one or more sceneNames, a lastScene, M links, a scene member, a scene value element, and a target resource may be included in a scene collection resource.

The scene value element in the scene collection resource may also include the name of the lastScene, a property name, a sub target value, a second precondition (also represented as Precondition), a precondition value corresponding to the second precondition, a second timer, and the number of repeats.

Since each link corresponds to a mapping element, each mapping element includes one second precondition, which is called an m-th second precondition. The m-th second precondition may consist of a relational expression and a logical expression, which may be expressed as "Magic string of EBNF format". The specific content may be set according to an actual situation, and there is no exhaustion here. In addition, each mapping element also corresponds to a repeat and an execution expression, which is represented by "exec". The specific expression content is also indicated as "Magic string of EBNF format" in the figure.

Specifically, based on the scene member n corresponding to the n-th link, the target object is referenced; the current state of the target device is judged according to the m-th second precondition included in the scene value element of the scene member n, and a judgment result is obtained.

When the judgment result indicates that the target device satisfies the m-th second precondition, the value of the m-th second precondition is true, and it is determined whether the number of repeats of performing the adjustment operation based on the m-th second precondition reaches the preset number of repeats; if not, the sub target value corresponding to each of the one or more properties are calculated based on the execution expression, and then within the time interval corresponding to the m-th second timer included in the mapping element, an included property of the target device is adjusted to a corresponding sub target value.

The processing based on the rule resource is the same as the aforementioned embodiments, and will not be repeated here. The present embodiment focuses only on the difference from the aforementioned embodiments. According to the solution provided by the example, taking a desk lamp as an example, a detailed description is given below.

When the lastScene is "open", the links of scene member 1 are "desk_lamp", in the scene value element of scene member 1, the precondition is "state==0", the property timing value is set to 0ms, a property repeat value is set to 1, and a property exec value is set to "state=1"; that is, the link of scene member 1 is desk lamp, the first of the second preconditions included in the scene value element indicates that the current state of the desk lamp is off; when the result is true, based on the time interval 0 of the first timer, the number of repeats 1 means no repeat, and the state of the desk lamp is set to on. The setting of repeat may be the same as above. When repeat is set to 1, it means the adjustment is performed only once without repeat; or, repeat may be set to 0, which means that the adjustment is performed only once without repeat. Repeat is flexibly set in actual processing, and there is no limit here.

The link of scene member 2 is "desk_lamp", in the scene value element, the precondition is "state==1 && current_brightness <= 95", the property timing value is set to 10ms, the property repeat value is set to 20, and the property exec value is set to "brightness= current_brightness+5"; that is, the second of the second preconditions is repeated 20 times, the execution expression indicates that the sub target value is equal to the current brightness value plus 5, and the time interval of each adjustment operation is 10ms, until the current brightness is not less than 95.

Or, when the lastScene is set to "close" in closing processing, the link of scene member 1 is "desk_lamp", in the scene value element, the precondition is "state==1 && current_brightness >= 5", the property timing value is set to 10ms, the property repeat value is set to 20, and the property exec value is set to "brightness= current_brightness-5".

The link of scene member 2 is "desk_lamp", in the scene value element, the precondition is "state==1 && current_brightness <= 0", the property timing value is set to 10ms, the property repeat value is set to 21, and the property exec value is set to "state=0".

The specific meaning is similar to that of turning on a desk lamp, except that the brightness value of the desk lamp is decreased each time until the brightness value is equal to 0.

The above examples 3 and 4 are described for the processing of one property. The present embodiment also includes cases for multiple properties. In the case directed to multiple properties, the difference from the above two examples is that the setting of more sub target values is added.

The difference from example 3 is that multiple property names and the execution expression corresponding to each property name are added to the mapping element. It is assumed that for two properties which are respectively called the first property and the second property, the first property and its corresponding execution expression 1, and the second property and its corresponding execution expression 2 are set in the mapping element corresponding to each of the second preconditions.

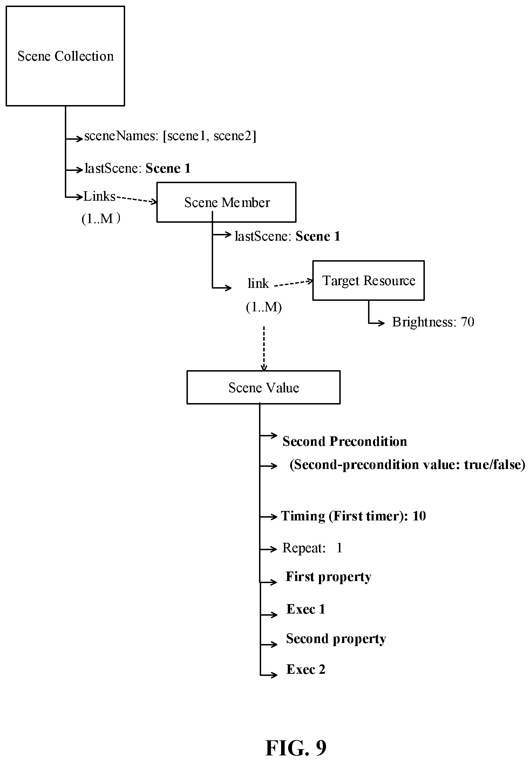

The difference from example 4 is only that multiple property names and the sub target value corresponding to each property are added to the scene value element. For example, with reference to FIG. 9, the first property and its corresponding execution expression 1, and the second property and its corresponding execution expression 2 are set in the scene value element.

It should be pointed out that different properties may have the same or different change trends. For example, in three properties, property 1 increases progressively in N adjustment operations; property 2 decreases progressively in N adjustment operations; and property 3 increases first, and then decreases (and may increase again) in N adjustment operations. There is no exhaustion here.

### Embodiment 3

The preset information may include: an execution script.

The execution script, when being run, is configured for performing the following processing: judging whether the target device satisfies the condition that needs to be satisfied for performing each adjustment operation on the target device, and based on the time interval of each of the N adjustment operations, adjusting the property value of the one or more properties of the target device to the corresponding sub target value.

The execution script in the present embodiment may be python or JavaScript or other script.

The preset information in the present embodiment may be set in the mapping element included in the scene collection resource, or the preset information may be set in the scene value element included in the scene collection resource.

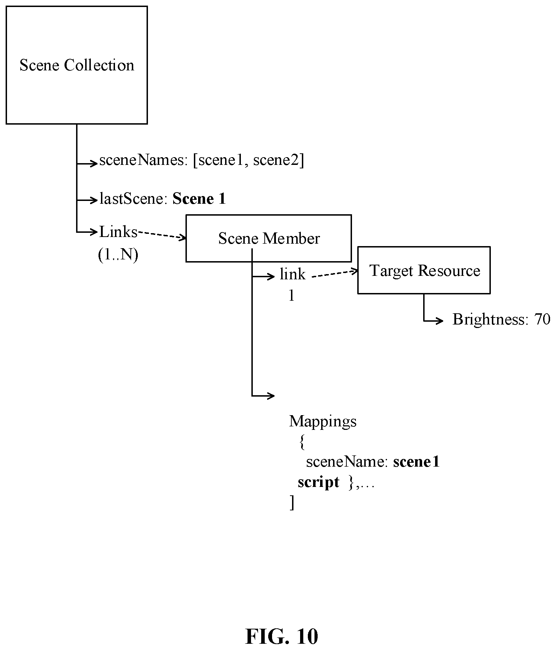

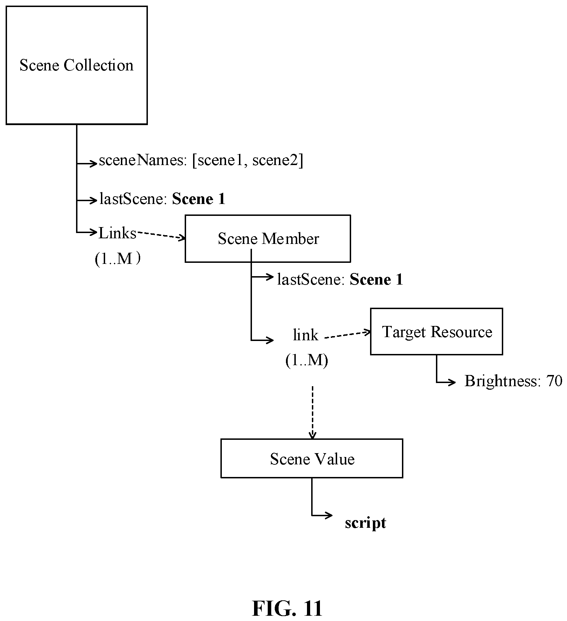

Two specific schematic diagrams may be seen in FIG. 10 and FIG. 11. FIG. 10 illustrates a style of the scene collection resource, and the specific description is the same as the above embodiments, except that only the execution script corresponding to this adjustment may be included in the mapping element. The difference from the above embodiments in FIG. 11 is that the corresponding execution script is set in the scene value element.

Further, the execution script may be understood as a processing program that may be called through an interface. Based on the processing program, different preconditions may be configured for judging the state N times, and N adjustment operations may be performed on the property value of the target device. Each adjustment operation may adjust the property values respectively corresponding to one or more properties.

Or, different preconditions may be configured for judging the state M times, and each precondition may be repeated multiple times (which is set according to the actual situation). When the number of repeats corresponding to the precondition is not reached, one or more sub target values are calculated according to the corresponding one or more execution expressions, and the one or more property values are adjusted based on the one or more sub target values.

The specific field or style of the execution script is not limited in the present embodiment.

Therefore, by means of the above solutions, it is possible to control the gradual adjustment of a property value of a target device from a current value to a target value by adding preset information to a scene collection resource. In this way, the device that does not support property gradient can achieve property gradient by judging preconditions and adjusting the property value many times, in addition, and the property value can be adjusted from the current value to the target value, thereby avoiding the problem in related art that the property value can only be adjusted from one fixed value to another, resulting in poor use experience.

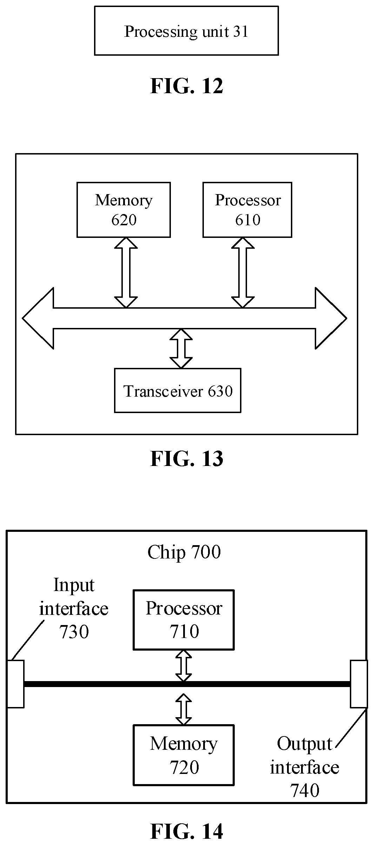

An embodiment of the disclosure also provides a device management apparatus to solve the above problem. As illustrated in FIG. 12, the apparatus may include: a processing unit 31.

The processing unit 31 is configured to, based on preset information included in a scene collection resource, perform N adjustment operations on a property value of each of one or more properties of a target device, and adjust the property value of each of the one or more properties of the target device from a current value to a target value, N being an integer greater than or equal to 2. The property value of each of the one or more properties of the target device gradually increases and/or gradually decreases in the N adjustment operations.

The preset information is configured for indicating a condition that needs to be satisfied for performing each of the N adjustment operations on one or more properties of the target device, and/or is configured for indicating a time interval of each of the N adjustment operations, and/or is configured for determining a sub target value corresponding to each of the one or more properties corresponding to each of the N adjustment operations.

Specifically, the solution provided in the example may be applied to devices with information processing and control capabilities, for example, a management device in a smart home system. That is, the device management apparatus may be set in the management devices or the devices with the information processing and control capabilities.

The detailed processing of the aforementioned solution is described through multiple embodiments.

### Embodiment 4

The preset information may include:
N first preconditions, and/or N first timers.

Each of the N first preconditions corresponds to an adjustment operation, and each of the first preconditions includes the condition that needs to be satisfied for performing the adjustment operation.

Each of the N first timers corresponds to an adjustment operation, and each of the first timers is configured for controlling the time interval of the corresponding adjustment operation.

And/or, the preset information may also include:
the sub target value of each of the one or more properties respectively corresponding to the N adjustment operations.

The N may be preset according to an actual situation. For example, in a scene where a target object is a desk lamp, the N may be set to a large value, for example, 20, to control the light to slowly grow brighter, then the corresponding sub target value may be controlled for 20 times to adjust the light property.

In addition, the first timers corresponding to different first preconditions may be the same or different.

The different first preconditions correspond to the different preset sub target values.

The processing unit 31 is configured to: during an n-th adjustment operation on the property value of the target device, judge whether a state of the target device satisfies the n-th first precondition included in the preset information of the scene collection resource, and obtain a first judgment result, n being an integer greater than or equal to 1 and less than or equal to N; and when the first judgment result indicates that the state of the target device satisfies the n-th first precondition, adjust the property value of each of the one or more properties of the target device to a corresponding sub target value within the time interval corresponding to the n-th first timer corresponding to the n-th first precondition.

The states of different target device may be set respectively, for example, taking into account whether the target device is turned on, and the current property value of the target device.

It should be pointed out that before the n-th adjustment operation is performed, on and off states of the target device may also be judged. For example, it is judged through the 0th precondition whether the target device is in the off state, and if so, the sub target value of the target device is set to "on".

The preset information may be set in a mapping element included in the scene collection resource. Or, the preset information may be set in a scene value element included in the scene collection resource.

### Embodiment 5

The preset information may include:
M second preconditions, and/or M second timers, and/or execution expressions respectively corresponding to the M second preconditions, M being an integer greater than or equal to 1 and less than or equal to N.

The second precondition is a condition that needs to be satisfied for performing at least one adjustment operation.

The second timer is configured for controlling the time interval of the adjustment operation.

The execution expression is an expression configured for calculating the sub target value corresponding to each of the one or more properties.

And/or, the preset information may also include:
the number of repeats corresponding to each of the M second preconditions.

The number of repeats is the number of adjustment operations performed on the property value of the one or more properties of the target device based on the corresponding second precondition.

The difference from example 1 is that in the present embodiment, an execution expression is added, which is configured for calculating the sub target value when the adjustment operation corresponding to the same second precondition is performed each time, and obtaining the sub target value corresponding to this adjustment. The number of repeats of each second precondition is determined by its corresponding number of repeats.

In addition, the second timers corresponding to different second preconditions may be the same or different.

Different second preconditions have different sub target values calculated based on corresponding execution expressions. In addition, the execution expressions included in different second preconditions may be the same or different.

It should be pointed out that in the present embodiment, N adjustment operations can be completed by means of M second preconditions and the number of repeats corresponding to them. For example, if M is equal 3 and N is equal to 10, the first of the second preconditions may correspond to three adjustment operations, or the number of repeats may be considered as 2; the second of the second preconditions may correspond to four adjustment operations, and the corresponding number of repeats may be 3; the third of the second preconditions may correspond to three adjustment operations, and the number of repeats may be 2. This is merely an example. In fact, the value of N and the value of M may be set more or less. There is no exhaustion here.

The processing unit 31 is configured to: during an n-th adjustment operation on the property value of the target device, judge whether the state of the target device satisfies an m-th second precondition included in the preset information of the scene collection resource, judge whether the number of adjustment operations performed based on the m-th second precondition reaches the corresponding number of repeats, and obtain the second judgment result, n being an integer greater than or equal to 1 and less than or equal to N, and m being an integer greater than or equal to 1; and when the second judgment result indicates that the state of the target device satisfies the m-th second precondition and the number of adjustment operations performed based on the m-th second precondition does not reach the corresponding number of repeats, calculate the sub target value corresponding to each of the one or more properties based on one or more execution expressions corresponding to the m-th second precondition, and within the time interval corresponding to the m-th second timer corresponding to the m-th second precondition, adjust the property value of each of the one or more properties of the target device to a corresponding sub target value.

It should be pointed out that before the n-th adjustment operation is performed, on and off states of the target device may also be judged. For example, it is judged through the 0th precondition whether the target device is in the off state, and if so, the sub target value of the target device is set to "on".

The preset information may be set in a mapping element included in the scene collection resource. Or, the preset information may be set in a scene value element included in the scene collection resource.

### Embodiment 6

The preset information may include:
an execution script.

The execution script is configured for performing the following processing at run time: judging whether the target device satisfies the condition that needs to be satisfied for performing each adjustment operation on the target device, and based on the time interval of each of the N adjustment operations, adjusting the property value of the one or more properties of the target device to the corresponding sub target value.

The execution script in the present embodiment may be python or JavaScript or other script.

The preset information in the present embodiment may be set in the mapping element included in the scene collection resource. Or, the preset information may be set in the scene value element included in the scene collection resource.

Therefore, by means of the above solutions, it is possible to control the gradual adjustment of a property value of a target device from a current value to a target value by adding preset information to a scene collection resource. In this way, the device that does not support property gradient can achieve property gradient by judging the preconditions and adjusting the property value many times, in addition, and the property value can be adjusted from the current value to the target value, thereby avoiding the problem in the related art that the property value can only be adjusted from one fixed value to another, resulting in poor use experience.

FIG. 13 is a structural schematic diagram of the above apparatus provided by an embodiment of the disclosure. The apparatus may be the terminal device or network device described in the embodiments. The apparatus illustrated in FIG. 13 may include a processor 610, and the processor 610 may call and run a computer program in a memory to implement the method in the embodiments of the disclosure.

Optionally, as illustrated in FIG. 13, the apparatus may also include a memory 620. The processor 610 may call and run the computer program in the memory 620 to implement the method in the embodiments of the disclosure.

The memory 620 may be a separate device independent of the processor 610, and may also be integrated in the processor 610.

Optionally, as illustrated in FIG. 13, the communication device 600 may further include a transceiver 630, and the processor 610 may control the transceiver 630 to communicate with another device, specifically sending information or data to the other device or receiving information or data sent by the other device.

The transceiver 630 may include a transmitter and a receiver. The transceiver 630 may further include an antenna. The number of the antenna may be one or more.

Optionally, the communication device 600 may specifically be the network device of the embodiments of the application, and the communication device 600 may implement corresponding flows implemented by the network device in each method of the embodiments of the application. For simplicity, elaborations are omitted herein.

Optionally, the communication device 600 may specifically be the terminal device or the network device in the embodiments of the disclosure, and the communication device 600 may implement corresponding flows implemented by the mobile terminal/terminal device in each method of the embodiments of the disclosure. For simplicity, elaborations are omitted herein.

FIG. 14 is a schematic structure diagram of a chip according to an embodiment of the application. The chip 700 illustrated in FIG. 14 includes a processor 710, and the processor 710 may call and run a computer program in a memory to implement the method in the embodiments of the disclosure.

Optionally, as illustrated in FIG. 14, the chip 700 may further include the memory 720. The processor 710 may call and run the computer program in the memory 720 to implement the method in the embodiments of the disclosure.

The memory 720 may be a separate device independent of the processor 710, and may also be integrated in the processor 710.

Optionally, the chip 700 may further include an input interface 730. The processor 710 may control the input interface 730 to communicate with other devices or chips; specifically, the input interface may acquire information or data sent by other devices or chips.

Optionally, the chip 700 may further include an output interface 740. The processor 710 may control the output interface 740 to communicate with other devices or chips; specifically, the output interface may output information or data to other devices or chips.

Optionally, the chip may be applied to the network device of the embodiments of the application, and the chip may implement corresponding flows implemented by the network device in each method of the embodiments of the disclosure. For simplicity, elaborations are omitted herein.

Optionally, the chip may be applied to the terminal device in the embodiments of the disclosure, and the chip may implement the corresponding flows, implemented by the terminal device, in each method of the embodiments of the disclosure, which will not be elaborated herein for simplicity.

It is to be understood that the chip mentioned in the embodiment of the disclosure may also be called a system-level chip, a system chip, a chip system or a system on chip, etc.

It is to be understood that the processor in the embodiment of the disclosure may be an integrated circuit chip and has a signal processing capability. In an implementation process, each operation of the method embodiment may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram disclosed in the embodiments of the application may be implemented or executed. The universal processor may be a microprocessor, or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as an RAM, a flash memory, an ROM, a PROM or EEPROM and a register. The storage medium is located in a memory, and the processor reads information in the memory, and completes the operations of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memories above mentioned are exemplarily but unlimitedly described; for example, the memories in the embodiments of the disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). That is, the memories in the embodiments of the application are intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to execute corresponding flows implemented by the network device in each method of the embodiments of the disclosure. For simplicity, elaborations are omitted herein.

Optionally, the computer-readable storage medium may be applied to a terminal device in the embodiments of the disclosure, and the computer program enables a computer to execute corresponding flows implemented by the mobile terminal/terminal device in each method of the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure, and the computer program instruction enables a computer to execute corresponding flows implemented by the network device in each method of the embodiments of the disclosure. For simplicity, elaborations are omitted herein.

Optionally, the computer program product may be applied to a mobile terminal/terminal device in the embodiments of the disclosure, and the computer program instruction enables the computer to execute corresponding flows implemented by the mobile terminal/terminal device in each method of the embodiments of the disclosure. For simplicity, elaborations are omitted herein.

The embodiments of the disclosure also provide a computer program.

Optionally, the computer program may be applied to a network device in the embodiments of the disclosure, and the computer program runs in a computer to enable the computer to execute corresponding flows implemented by the network device in each method of the embodiments of the disclosure. For simplicity, elaborations are omitted herein.

Optionally, the computer program may be applied to a mobile terminal/terminal device in the embodiments of the disclosure, and the computer program runs in the computer to enable the computer to execute corresponding flows implemented by the mobile terminal/terminal device in each method of the embodiments of the disclosure. For simplicity, elaborations are omitted herein.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the application.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the application substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the application. The abovementioned storage medium includes: various media capable of storing program codes such as a U disk, a mobile hard disk, a ROM, a RAM, a magnetic disk or an optical disk.

The above is only the specific implementation manner of the disclosure and not intended to limit the scope of protection of the disclosure. Any variations or replacements apparent to those skilled in the art within the technical scope described by the disclosure shall fall within the scope of protection of the application. Therefore, the scope of protection of the application shall be subject to the scope of protection of the claims.

## Claims

1. A device management method, comprising:
based on preset information comprised in a scene collection resource, performing N adjustment operations on a property value of each of one or more properties of a target device, and adjusting the property value of each of the one or more properties of the target device from a current value to a target value, N being an integer greater than or equal to 2; wherein, the property value of each of the one or more properties of the target device gradually increases and/or gradually decreases in the N adjustment operations;
wherein the preset information is configured for indicating a condition that needs to be satisfied for performing each of the N adjustment operations on the one or more properties of the target device, and/or is configured for indicating a time interval of each of the N adjustment operations, and/or is configured for determining a sub target value corresponding to each of the one or more properties corresponding to each of the N adjustment operations.

2. The method of claim 1, wherein the preset information comprises:
N first preconditions, and/or N first timers;
wherein, each of the N first preconditions corresponds to one adjustment operation, and each of the first preconditions comprises the condition that needs to be satisfied for performing the adjustment operation;
each of the N first timers corresponds to one adjustment operation, and each of the first timers is configured for controlling the time interval of the corresponding adjustment operation.

3. The method of claim 1 or 2, wherein the preset information comprises:
the sub target value of each of the one or more properties respectively corresponding to the N adjustment operations.

4. The method of claim 3, wherein based on the preset information comprised in the scene collection resource, performing the N adjustment operations on the property value of the one or more properties of the target device, and adjusting the property value of each of the one or more properties of the target device from the current value to the target value comprises:
during an n-th adjustment operation on the property value of the one or more properties of the target device, judging whether a state of the target device satisfies an n-th first precondition comprised in the preset information of the scene collection resource, and obtaining a first judgment result, wherein n is an integer greater than or equal to 1 and less than or equal to N; and
when the first judgment result indicates that the state of the target device satisfies the n-th first precondition, adjusting the property value of each of the one or more properties of the target device to a corresponding sub target value within the time interval corresponding to an n-th first timer.

5. The method of claim 1, wherein the preset information comprises:
M second preconditions, and/or M second timers, and/or one or more execution expressions respectively corresponding to the M second preconditions,
wherein M is an integer greater than or equal to 1 and less than or equal to N;
the second precondition is the condition that needs to be satisfied for performing at least one adjustment operation;
the second timer is configured for controlling the time interval of the adjustment operation; and
the execution expression is an expression configured for calculating the sub target value corresponding to each of the one or more properties.

6. The method of claim 5, wherein the preset information further comprises:
the number of repeats corresponding to each of the M second preconditions;
wherein the number of repeats is the number of adjustment operations performed on the property value of the one or more properties of the target device based on a corresponding second precondition.

7. The method of claim 6, wherein based on the preset information comprised in the scene collection resource, performing N adjustment operations on the property value of the one or more properties of the target device, and adjusting the property value of each of the one or more properties of the target device from the current value to the target value comprises:
during an n-th adjustment operation on the property value of the one or more properties of the target device, judging whether the state of the target device satisfies an m-th second precondition comprised in the preset information of the scene collection resource, judging whether the number of adjustment operations performed based on the m-th second precondition reaches a corresponding number of repeats, and obtaining a second judgment result, wherein n is an integer greater than or equal to 1 and less than or equal to N, and m is an integer greater than or equal to 1; and
when the second judgment result indicates that the state of the target device satisfies the m-th second precondition and the number of adjustment operations performed based on the m-th second precondition does not reach the corresponding number of repeats, calculating the sub target value corresponding to each of the one or more properties based on one or more execution expressions corresponding to the m-th second precondition, and adjusting the property value of each of the one or more properties of the target device to a corresponding sub target value within the time interval corresponding to an m-th second timer.

8. The method of claim 1, wherein the preset information comprises: an execution script;
wherein the execution script, when being run, is configured for performing following processing at run time: judging whether the target device satisfies the condition that needs to be satisfied for performing each adjustment operation on the target device, and adjusting the property value of the one or more properties of the target device to a corresponding sub target value based on the time interval of each of the N adjustment operations.

9. The method of any one of claims 1 to 8, wherein
the preset information is set in a mapping element included in the scene collection resource; or,
the preset information is set in a scene value element included in the scene collection resource.

10. A device management apparatus, comprising:
a processing unit, configured to, based on preset information comprised in a scene collection resource, perform N adjustment operations on a property value of each of one or more properties of a target device, and adjust the property value of each of the one or more properties of the target device from a current value to a target value, N being an integer greater than or equal to 2; wherein, the property value of each of the one or more properties of the target device gradually increases and/or gradually decreases in the N adjustment operations;
wherein the preset information is configured for indicating a condition that needs to be satisfied for performing each of the N adjustment operations on one or more properties of the target device, and/or is configured for indicating a time interval of each of the N adjustment operations, and/or is configured for determining a sub target value corresponding to each of the one or more properties corresponding to each of the N adjustment operations.

11. The apparatus of claim 10, wherein the preset information comprises:
N first preconditions, and/or N first timers;
wherein, each of the N first preconditions corresponds to one adjustment operation, and each of the first preconditions comprises the condition that needs to be satisfied for performing the adjustment operation;
each of the N first timers corresponds to one adjustment operation, and each of the first timers is configured for controlling the time interval of the corresponding adjustment operation.

12. The apparatus of claim 10 or 11, wherein the preset information comprises:
the sub target value of each of the one or more properties respectively corresponding to the N adjustment operations.

13. The apparatus of claim 12, wherein the processing unit is configured to:
during an n-th adjustment operation on the property value of the target device, judge whether a state of the target device satisfies an n-th first precondition comprised in the preset information of the scene collection resource, and obtain a first judgment result, wherein n is an integer greater than or equal to 1 and less than or equal to N; and
when the first judgment result indicates that the state of the target device satisfies the n-th first precondition, adjust the property value of each of the one or more properties of the target device to a corresponding sub target value within the time interval corresponding to the n-th first timer.

14. The apparatus of claim 10, wherein the preset information comprises:
M second preconditions, and/or M second timers, and/or execution expressions respectively corresponding to the M second preconditions,
wherein M is an integer greater than or equal to 1 and less than or equal to N;
the second precondition is the condition that needs to be satisfied for performing at least one adjustment operation;
the second timer is configured for controlling the time interval of the adjustment operation; and
the execution expression is an expression configured for calculating the sub target value corresponding to each of the one or more properties.

15. The apparatus of claim 14, wherein the preset information further comprises:
the number of repeats corresponding to each of the M second preconditions;
wherein the number of repeats is the number of adjustment operations performed on the property value of the one or more properties of the target device based on a corresponding second precondition.

16. The apparatus of claim 15, wherein the processing unit is configured to:
during an n-th adjustment operation on the property value of the target device, judge whether the state of the target device satisfies an m-th second precondition comprised in the preset information of the scene collection resource, judge whether the number of adjustment operations performed based on the m-th second precondition reaches a corresponding number of repeats, and obtain a second judgment result, wherein n is an integer greater than or equal to 1 and less than or equal to N, and m is an integer greater than or equal to 1; and
when the second judgment result indicates that the state of the target device satisfies the m-th second precondition and the number of adjustment operations performed based on the m-th second precondition does not reach the corresponding number of repeats, calculate the sub target value corresponding to each of the one or more properties based on one or more execution expressions corresponding to the m-th second precondition, and adjust the property value of each of the one or more properties of the target device to a corresponding sub target value within the time interval corresponding to an m-th second timer.

17. The apparatus of claim 10, wherein the preset information comprises:
an execution script;
wherein the execution script, when being run, is configured for performing following processing: judging whether the target device satisfies the condition that needs to be satisfied for performing each adjustment operation on the target device, and adjusting the property value of the one or more properties of the target device to a corresponding sub target value based on the time interval of each of the N adjustment operations.

18. The apparatus of any one of claims 10 to 17, wherein
the preset information is set in a mapping element included in the scene collection resource; or,
the preset information is set in a scene value element included in the scene collection resource.

19. A device management apparatus, comprising: a processor and a memory configured to store a computer program capable of running in the processor;
wherein the processor is configured to call and run the computer program stored in the memory to perform operations of the method of any one of claims 1 to 9.

20. A chip, comprising: a processor, configured to call a computer program from a memory and run the computer program to cause a device installed with the chip to implement the method of any one of claims 1 to 9.

21. A computer-readable storage medium, configured to store a computer program which enables a computer to execute operations of the method of any one of claims 1 to 9.

22. A computer program product, comprising a computer program instruction which enables a computer to execute the method of any one of claims 1 to 9.

23. A computer program, enabling a computer to perform the method of any one of claims 1 to 9.
